# FASCICULE DE BREVET EUROPEEN

(11) **EP 1 268 263 B1**
(45) Date de publication et mention de la délivrance du brevet: **15.09.2004**
(21) Numéro de dépôt: 01904251.4
(22) Date de dépôt: 16.02.2001
(51) Int. Cl.: B62D 37/02, B62D 25/18

(54) **STABILISATEUR AERODYNAMIQUE POUR VEHICULE AUTOMOBILE**
AERODYNAMISCHER STABILISATOR FÜR KRAFTFAHRZEUGE
AERODYNAMIC STABILIZER FOR MOTOR VEHICLE

(30) Priorité: 30.03.2000 EP 00106813; 10.05.2000 WO PCT/IB00/00612
(43) Date de publication de la demande: 02.01.2003
(73) Titulaire: Brulhart, Yvan, 1295 Mies (SE)
(72) Inventeur: Brulhart, Yvan, 1295 Mies (SE)
(74) Mandataire: Micheli & Cie
(86) Numéro de dépôt international: PCT/IB2001/000204
(87) Numéro de publication internationale: WO 2001/072573

(56) Documents cités:
- WO-A-86/04030
- FR-A- 1 432 646
- FR-A- 2 165 068
- NL-A- 9 400 637
- US-A- 1 352 798
- US-A- 4 883 308

## Description

La présente invention a pour objet un stabilisateur aérodynamique pour véhicule automobile.

On connaît de tels déflecteurs constitués par des béquets ou spoilers fixés à la partie basse de la calandre ou sur l'arrière de la carrosserie ou du châssis. Ces spoilers ont pour effet d'appuyer aérodynamiquement la voiture au sol pour augmenter l'adhérence des pneumatiques à la chaussée et donc améliorer la motricité, la directivité et la tenue de route du véhicule ainsi équipé.

Ces spoilers ont toutefois des inconvénients importants, surtout pour les véhicules de course ou de rallye. Ils augmentent le poids du véhicule, ils sont difficiles à fixer sur le véhicule pour résister aux forces qu'ils subissent et pour ce qui est des spoilers avant ils sont très vulnérables et sont détériorés au moindre choc.

Les documents FR 2 165 068, NL 9 400 637 et FR 1 432 646 divulguent un stabilisateur selon le préambule de la revendication 1. Ils exposent tous des dispositifs destinés à améliorer l'aérodynamique autour des roues des véhicules à moteur. Ces dispositifs sont constitués par une chicane disposée, contrairement au spoilers mentionnés ci-dessus, dans l'espace compris entre la. roue et la carrosserie du véhicule. Les dispositifs proposés sont pourtant tous relativement larges et ont une grande taille par comparaison à l'effet qu'il produisent et leur logement auquel ils sont destinés. De plus, la forme de ces dispositifs ne permet pas d'optimiser au mieux l'effet désiré.

La présente invention a pour but la réalisation d'un stabilisateur aérodynamique pour véhicule automobile, léger, peu encombrant, facile à fixer au véhicule, peu vulnérable aux chocs et peu onéreux et qui n'offre pas ou peu de prise à la pénétration dans l'air et ne ralentisse donc pas le véhicule.

La présente invention a pour objet un stabilisateur aérodynamique pour véhicule automobile qui se distingue par les caractéristiques énumérées à la revendication 1.

Le dessin annexé illustre schématiquement et à titre d'exemple plusieurs formes d'exécution d'un stabilisateur aérodynamique. L'invention est illustrée dans les figures 7-9 seulement.

La figure 1 illustre partiellement de côté un véhicule équipé d'une première forme d'exécution du stabilisateur aérodynamique.

La figure 2 est une vue partielle en perspective d'un passage de roue équipé du stabilisateur de la figure 1.

La figure 3 illustre une seconde forme d'exécution du stabilisateur.

La figure 4 illustre en perspective une troisième forme d'exécution du stabilisateur équipant une F1.

La figure 5 est une vue de dessus de la figure 4.

La figure 6 est une vue de face avant de la figure 4.

La figure 7 est une vue en perspective du passage de roue avant gauche d'un véhicule équipé d'une forme d'exécution du stabilisateur selon l'invention.

La figure 8 est une vue en plan du stabilisateur de la figure 7.

La figure 9 est une vue en plan d'un stabilisateur selon la forme d'exécution selon l'invention mais destiné à équiper un passage de roue arrière du véhicule.

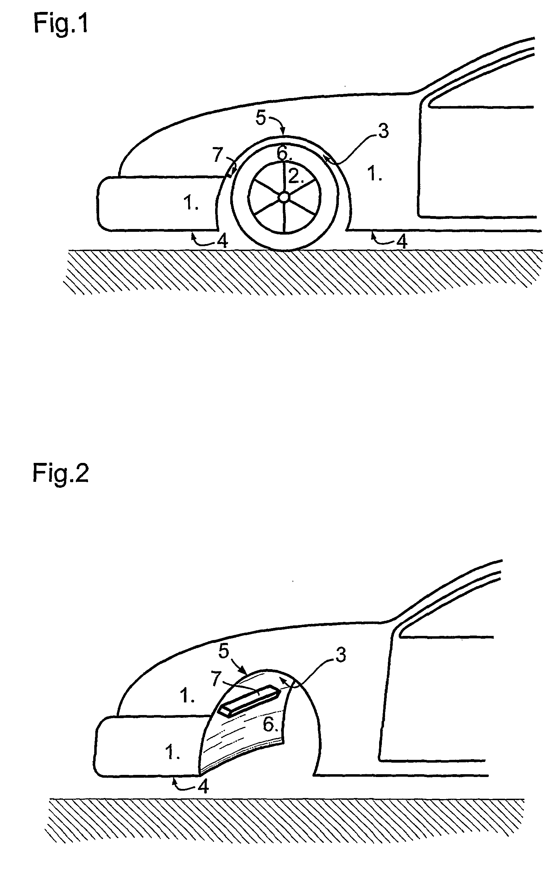

Sur la figure 1 on voit la partie avant gauche d'un véhicule automobile comportant, montée sur un châssis, la carrosserie 1 et le train de roues avant 2. Chaque roue 2 est montée rotative et les roues avant orientables à gauche ou à droite, dans un passage de roue 3 que comporte la carrosserie 1. Ce passage de roue 3 forme une cavité, ouverte sur le côté extérieur de la voiture, à l'intérieur de laquelle la roue peut tourner et braquer librement. Ce passage de roue est également ouvert vers le bas et s'étend en fait de la garde au sol du véhicule 4 à un point 5 haut légèrement en dessus du pneumatique 5 de la roue 2.

Lorsque le véhicule avance, et surtout lorsque la vitesse de déplacement est importante, il se crée une circulation d'air autour des roues 2 dans le passage de roue 3 qui tend à diminuer la force d'appui au sol de la roue 2 et du pneumatique 6 provoquant les inconvénients biens connus de perte d'adhérence, de perte de motricité, de tenue de route et de directivité.

Le stabilisateur selon l'invention, constitué par une chicane 7 montée dans la partie avant du passage de roue 3 entre la garde au sol 4 et le point haut 5 du passage de roue, de préférence sur la partie avant de ce passage de roue, permet de modifier le flux d'air dans le passage de roue et de diminuer l'effet sustentateur ou déstabilisateur de ce flux d'air. Dès lors la roue 2 retrouve son adhérence au sol de même que sa motricité et sa directivité. La tenue de route du véhicule est ainsi restaurée.

La chicane 7 est par exemple formée par un fer plat ou un barreau fixé à la carrosserie dans la partie avant du passage de roue s'étendant sensiblement transversalement sur tout ou partie de la largeur du passage de roue. De préférence cette chicane 7 s'étend au moins sur une longueur correspondant à la largeur du pneumatique 6.

Cette chicane 7 peut être rectiligne ou présenter la forme d'une ligne brisée ou ondulée. Sa hauteur dépend de l'endroit où elle est placée dans le passage de roue et de la distance séparant à cet endroit le pneumatique du passage de roue.

Dans des variantes cette chicane 7 pourrait être constituée par un treillis ou une tôle ajourée.

Dans d'autres variantes la forme et les dimensions de la chicane peuvent varier. Cette chicane peut, sur sa tranche libre disposée en regard du pneumatique, présenter une forme courbe sensiblement parallèle à la forme extérieure du pneumatique.

Il est évident que l'on peut prévoir plusieurs chicanes disposées le long de la paroi du passage de roue. Dans ce cas, ces chicanes peuvent être disposées les unes à la suite des autres ou en quinconce.

Dans toutes les formes d'exécutions et variantes, le résultat de la pose de ces chicanes est toujours une modification du flux d'air circulant dans le passage de roue tendant à réduire la poussée ascensionnelle crée par ce flux d'air sur le véhicule.

La fixation de la ou des chicanes peut se faire par soudure, collage, à l'aide de vis ou tout autre moyen adéquat.

Un tel stabilisateur est bon marché, facile à réaliser et à fixer sur le véhicule, il n'offre aucune résistance à l'avancement du véhicule et de plus ne se voit pas et est protégé des chocs.

Le véhicule peut être équipé d'un tel stabilisateur sur ses roues avant uniquement ou sur ses roues avant et arrière, ou sur ses roues arrières uniquement.

Dans le cas de voitures comportant une carrosserie moulée la chicane formant le stabilisateur peut faire partie intégrante de la pièce de carrosserie formant le passage de roue.

Dans cette première forme d'exécution, la ou les chicanes sont disposées transversalement par rapport à la voiture, soit sensiblement parallèlement à l'axe de la roue.

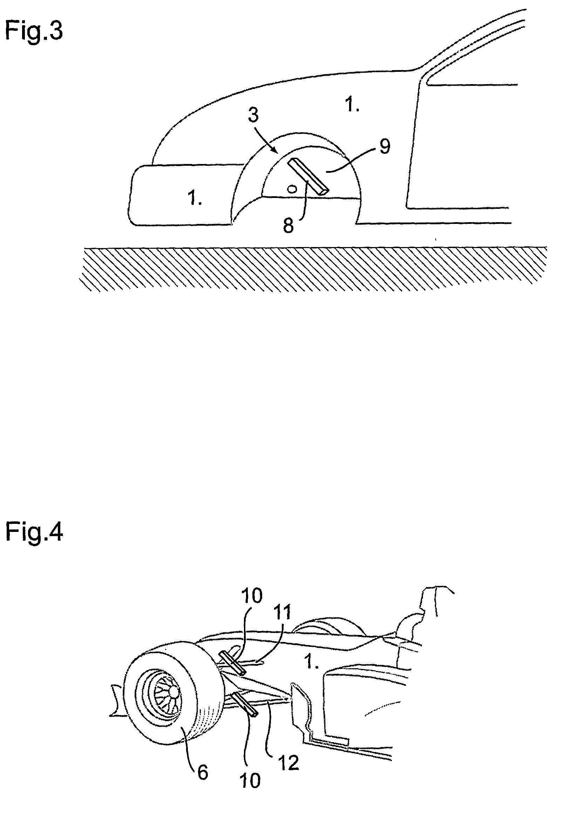

La figure 3 illustre une seconde forme d'exécution du stabilisateur aérodynamique. Ici également ce stabilisateur est formé par une chicane 8 ou ailette mais celle-ci est fixée ou venue d'une pièce de fabrication avec le fond 9 du passage de roue 3. Ainsi, cette chicane est située dans l'espace latéral entre le pneumatique et le fond 9 du passage de roue. De préférence, cette chicane 8 est inclinée vers l'arrière d'un angle compris entre 20° et 60° par rapport au plan de roulement du véhicule.

La présence de cette chicane modifie les turbulences dans le passage de roue et provoque une dépression entre la roue 6 et le fond 9 du passage de roue ce qui favorise le refroidissement des freins en plus d'améliorer la stabilité du véhicule.

Dans cette seconde forme d'exécution, la ou les chicanes sont situées perpendiculairement à l'axe de la roue, soit sensiblement dans un plan parallèle à l'axe longitudinal de la voiture.

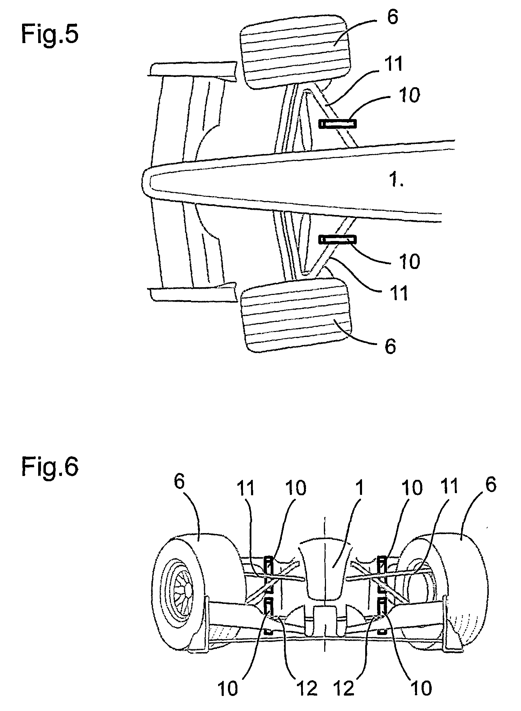

La troisième forme d'exécution du stabilisateur dynamique est illustrée aux figures 4, 5 et 6 et est destinée à équiper des voitures de courses et formule 1. Ces voitures ne comportent pas de passage de roue à proprement parler, toutefois on remarque que l'espace compris entre la partie avant carrossée ou museau de la voiture et les pneumatiques avant est également le siège de turbulences et de surpressions.

Ces turbulences peuvent être éliminées et on peut créer une dépression entre les pneumatiques et la carrosserie en fixant des chicanes 10 sur les barres de support 11, 12 des roues. Ces chicanes 10 se présentent sous la forme de plaquettes inclinées vers l'arrière d'un angle compris entre 0° et 60°, de préférence 45° par rapport au plan de roulement du véhicule. Dans la forme d'exécution illustrée deux chicanes 10 sont fixées l'une sur la barre supérieure 11, et l'autre sur la barre inférieure 12 mais dans des variantes une seule chicane peut être prévue sur l'une des barres de fixation 11 ou 12. De même dans l'exemple illustré les chicanes 10 sont fixées sur le bras arrière des barres de fixation 11, 12 mais elles pourraient être fixées sur les bras avant de ces barres de fixation.

La présence de ces chicanes 10 facilite l'évacuation de l'air de l'espace compris entre la roue et la carrosserie ce qui stabilise la roue qui retrouve son adhérence et surtout provoque une dépression qui aspire de l'air au travers de la roue permettant un meilleur refroidissement des freins.

Bien entendu, ces chicanes peuvent être montées sur les barres de fixation des roues arrière également.

Ces chicanes s'étendent de préférence sensiblement parallèlement à l'axe longitudinal de la voiture mais elles pourraient être inclinées transversalement également dans des variantes.

Dans une variante, les chicanes 10 à la place d'être montées sur les barres de suspension de la roue pourraient être fixées ou venue d'une pièce de fabrication avec la paroi de la carrosserie faisant face au côté intérieur de la roue.

Dans les formes d'exécution décrites, les chicanes sont planes; il est évident que dans des variantes elles pourraient être profilées et/ou présenter une forme aérodynamique.

De plus, le poids et les dimensions des chicanes dépendent évidemment du véhicule sur lequel elles sont montées.

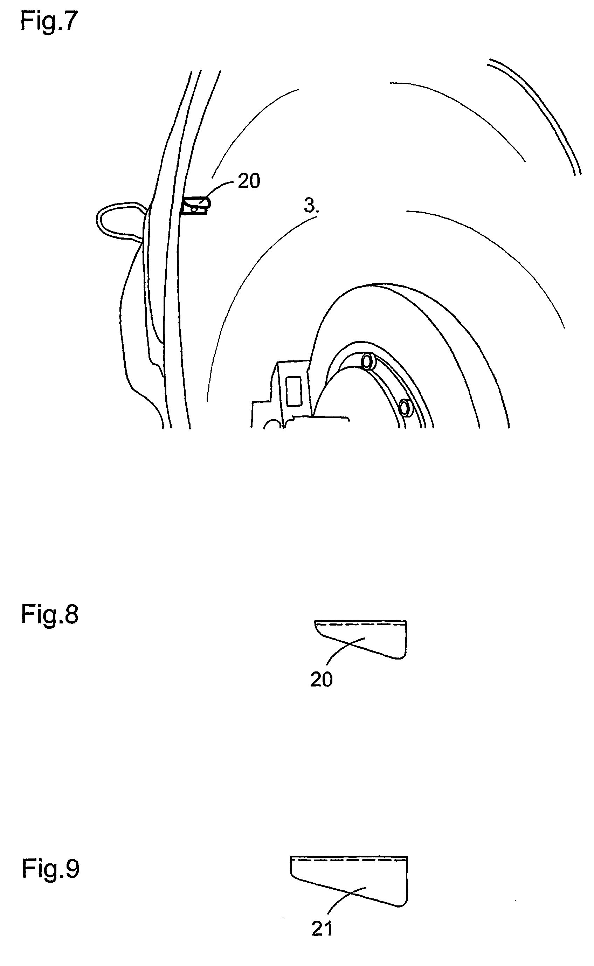

Les figures 7 à 9 illustrent une forme d'exécution de la chicane ou stabilisateur aérodynamique selon l'invention.

Dans cette forme d'exécution les dimensions de la chicane sont réduites. Les chicanes destinées à équiper les passages de roue avant, illustrées à la figure 8, présentent la forme d'un équerre dont la partie rectangulaire est destinée à la fixation tandis que l'autre aile 20 présente la forme générale d'un triangle rectangle dont deux sommets sont arrondis. La longueur de cette chicane est de l'ordre de 20 à 25 mm tandis que sa largeur est comprise entre 7 à 15 mm.

Cette chicane est fixée dans le passage de roue, comme illustré à la figure 7, sur une droite passant par l'axe de la roue et faisant un angle de 45° environ par rapport au bas de caisse. De plus cette chicane est fixée de manière à ce que sa face active 20 soit sensiblement perpendiculaire au passage de roue et que sa plus grande largeur soit située vers l'intérieur du passage de roue. Le positionnement de la chicane est tel qu'elle se situe en regard du bord extérieur du pneumatique soit en bordure externe du passage de roue.

La chicane arrière équipant la même voiture est illustrée à la figure 9. Sa face active 21 est légèrement plus grande, 25 à 35 mm de longueur et 10 à 15 mm de largeur mais son positionnement dans le passage de roue arrière est semblable au positionnement de la chicane avant par rapport au passage de roue.

Des essais ont montré que, de façon surprenante, de telles petites chicanes ne s'étendant de loin pas sur toute la largeur du pneumatique mais seulement sur environ 1/10 de sa largeur ont une efficacité encore plus marquée que des chicanes d'une largeur sensiblement égale au pneumatique.

## Revendications

1. Stabilisateur aérodynamique pour véhicule à moteur constitué par au moins une chicane disposée dans l'espace compris entre la roue et la carrosserie du véhicule, **caractérisé par le fait que** la surface active de chaque chicane présente la forme générale d'un triangle rectangle dont deux sommets sont arrondis et **par le fait que** la largeur de chaque chicane est sensiblement réduite par rapport à la largeur du pneumatique.

2. Stabilisateur selon la revendication 1, **caractérisé par le fait que** la longueur de la face active de la chicane est comprise entre 20 et 35 mm tandis que sa largeur est comprise entre 7 et 15 mm.

3. Stabilisateur selon l'une des revendications précédentes, **caractérisé par le fait que** la largeur d'une chicane est sensiblement égale à 1/10 de la largeur du pneumatique.

4. Stabilisateur selon l'une des revendications précédentes, **caractérisé par le fait que** chaque passage de roue comporte une seule chicane fixée à proximité du bord extérieur du passage de roue.

5. Stabilisateur selon l'une des revendications précédentes, **caractérisé par le fait que** cette chicane est constituée par un fer plat ajouré ou non.

6. Stabilisateur selon l'une des revendications 1 à 4, **caractérisé par le fait que** cette chicane est constituée par un treillis.

7. Stabilisateur selon l'une des revendications 1 à 3 ou 5 à 6, **caractérisé par le fait qu'**il comporte plusieurs chicanes disposées les unes à la suite des autres.

8. Stabilisateur selon la revendication 7, **caractérisé par le fait que** les chicanes sont disposées en quinconce.

9. Stabilisateur selon l'une des revendications précédentes, **caractérisé par le fait que** la ou les chicanes s'étendent sensiblement parallèlement à l'axe de la roue.

10. Stabilisateur selon l'une des revendications précédentes, **caractérisé par le fait que** la ou les chicanes sont positionnées dans la partie avant du passage de roue.

## Patentansprüche

1. Aerodynamische Stabilisierungsvorrichtung für Motorfahrzeuge, welche aus zumindest einer Stauscheibe besteht, die im Raum zwischen dem Reifen und der Karosserie des Fahrzeugs angebracht ist, **dadurch gekennzeichnet, daß** die aktive Oberfläche jeder Stauscheibe die allgemeine Form eines rechtwinkligen Dreiecks, dessen zwei Spitzen abgerundet sind, aufweist, und daß die Breite jeder Stauscheibe im Vergleich zur Breite des Reifens merklich geringer ist.

2. Stabilisierungsvorrichtung gemäß Anspruch 1, **dadurch gekennzeichnet, daß** die Länge der aktiven Oberfläche der Stauscheibe zwischen 20 und 35 mm liegt, während seine Breite zwischen 7 und 15 mm liegt.

3. Stabilisierungsvorrichtung gemäß einem der vorangehenden Ansprüche, **dadurch gekennzeichnet, daß** die Breite einer Stauscheibe merklich gleich 1/10 der Reifenbreite ist.

4. Stabilisierungsvorrichtung gemäß einem der vorangehenden Ansprüche, **dadurch gekennzeichnet, daß** jeder Reifenkasten eine einzige Stauscheibe, welche in der Nähe des äußeren Randes des Reifenkastens befestigt ist, aufweist.

5. Stabilisierungsvorrichtung gemäß einem der vorangehenden Ansprüche, **dadurch gekennzeichnet, daß** diese Stauscheibe aus einem Bandeisen mit oder ohne Aussparungen besteht.

6. Stabilisierungsvorrichtung gemäß einem der vorangehenden Ansprüche 1 bis 4, **dadurch gekennzeichnet, daß** diese Stauscheibe aus einem Drahtgitter besteht.

7. Stabilisierungsvorrichtung gemäß einem der vorangehenden Ansprüche 1 bis 3 oder 5 bis 6, **dadurch gekennzeichnet, daß** sie mehrere hintereinander angebrachte Stauscheiben aufweist.

8. Stabilisierungsvorrichtung gemäß Anspruch 7, **dadurch gekennzeichnet, daß** die Stauscheiben in Rautenstellung angebracht sind.

9. Stabilisierungsvorrichtung gemäß einem der vorangehenden Ansprüche, **dadurch gekennzeichnet, daß** die Stauscheibe(n) sich merklich parallel zur Reifenachse ausdehnen.

10. Stabilisierungsvorrichtung gemäß einem der vorangehenden Ansprüche, **dadurch gekennzeichnet, daß** die Stauscheibe(n) im vorderen Teil des Radkastens angeordnet sind.

## Claims

1. Aerodynamic stabiliser for motor vehicles constituted of at least one baffle plate disposed in the space provided between the tire and the carriage of the vehicle, **characterised by** the fact that the active surface of each baffle plate has the general shape of a right-angle triangle in which two angles are rounded and by the fact that the width of each baffle plate is sensibly reduced with respect to the tire width.

2. Stabiliser according to claim 1, **characterised by** the fact that the length of the active surface of the baffle plate is between 20 and 35 mm while its width is between 7 and 15 mm.

3. Stabiliser according to any one of the preceding claims, **characterised by** the fact that the width of a baffle plate is sensibly equal to 1/10 of the tire width.

4. Stabiliser according to any one of the preceding claims, **characterised by** the fact that each tire passage comprises one single baffle plate fixed near the outer edge of the tire passage.

5. Stabiliser according to any one of the preceding claims, **characterised by** the fact that this baffle plate is constituted of a strip iron with or without openings.

6. Stabiliser according to one of the preceding claims 1 to 4, **characterised by** the fact that this baffle plate is constituted of a trellis.

7. Stabiliser according to one of the preceding claims 1 to 3 or 5 to 6, **characterised by** the fact that it comprises several baffle plates which are disposed one after the other.

8. Stabiliser according to claim 7, **characterised by** the fact that the baffle plates are disposed at a quincunx.

9. Stabiliser according to one of the preceding claims, **characterised by** the fact that the baffle plate(s) extend sensibly parallel to the tire axis.

10. Stabiliser according to one of the preceding claims, **characterised by** the fact that the baffle plate(s) are positioned in the front section of the tire passage.
